# FASCICULE DE BREVET EUROPEEN

(11) **EP 0 365 396 B1**
(45) Date de publication et mention de la délivrance du brevet: **10.02.1993**
(21) Numéro de dépôt: 89402798.6
(22) Date de dépôt: 11.10.1989
(51) Int. Cl.: B60T 7/08, G05G 1/04

(54) **Platine de frein à main pour véhicule automobile**
Handbremsenhalterung für ein Kraftfahrzeug
Hand brake mounting unit for a motor vehicle

(30) Priorité: 17.10.1988 FR 8813630
(43) Date de publication de la demande: 25.04.1990
(73) Titulaire: AUTOMOBILES PEUGEOT, 75116 Paris (FR); AUTOMOBILES CITROEN, 92200 Neuilly-sur-Seine (FR)
(72) Inventeur: Edwige, François, F-92800 Puteaux (FR)
(74) Mandataire: Fabien, Henri

(56) Documents cités:
- FR-A- 1 502 031
- FR-A- 1 598 549
- FR-A- 2 582 272

## Description

L'invention a pour objet une platine de frein à main, notamment pour véhicule automobile, adaptée pour faciliter le montage du véhicule de manière automatique.

On cherche de plus en plus, à l'heure actuelle, à monter les véhicules automobiles de manière automatique, par exemple à l'aide de robots. Pour cela, on prépare des sous-ensembles qui sont ensuite assemblés à l'aide de robots, puis fixés les uns aux autres. L'assemblage se fait autant que possible par des mouvements simples, par exemple des translations horizontales ou verticales.

En ce qui concerne les freins à main, ceux-ci comportent généralement un levier monté sur un support que l'on fixe sur le plancher du véhicule. L'ensemble constitué par le levier et son support, appelé «platine de frein à main», peut être monté préalablement sur l'ensemble mécanique du véhicule, la caisse étant amenée par dessus cet ensemble mécanique. Mais la platine de frein à main peut aussi être mise en place à une autre étape du montage.

La platine se trouvant initialement à l'extérieur de la caisse et le levier devant se trouver à l'intérieur de l'habitacle, il est nécessaire de prévoir un trou dans le plancher du véhicule pour le passage du levier et d'au moins une partie de son support. En général, le plancher est horizontal et la platine est amenée par un mouvement de translation verticale. Il faut donc que le trou soit de dimensions suffisamment importantes pour permettre le passage du levier car celui-ci fait un angle faible avec le plancher: en effet, son mouvement est limité par des butées et, même en position de serrage du frein, cet angle est rarement supérieur à 45°.

Cependant, il est souhaitable que le trou soit de dimensions aussi réduites que possible. En effet, un trou de dimensions importantes diminue la rigidité du plancher et rend plus difficile la réalisation de l'étanchéité entre l'intérieur et l'extérieur de la caisse lors de la fixation du support sur le plancher.

L'invention résoud ce problème en proposant une platine de frein à main qui peut être mise en place en ne nécessitant qu'un trou de dimensions réduites dans le plancher du véhicule.

Plus précisément, l'invention concerne une platine de frein à main comprenant, de manière connue, un levier monté sur un support. Selon l'invention, le levier est réalisé en deux parties mobiles l'une par rapport à l'autre entre une position de montage et une position de fonctionnement et la platine comporte des moyens de verrouillage desdites deux parties en position de fonctionnement.

Cette disposition permet d'obtenir un encombrement réduit lorsque les deux parties du levier sont en position de montage. La platine peut donc passer à travers un trou de faibles dimensions avant d'être ensuite fixée au plancher du véhicule et mise en position de fonctionnement.

Le levier est généralement de forme allongée. De préférence dans ce cas, lesdites deux parties sont mobiles l'une par rapport à l'autre en rotation autour d'un axe sensiblement perpendiculaire à la direction générale du levier.

Ceci facilite la mise en position de fonctionnement puisqu'il suffit d'un simple mouvement de rotation pour mettre les deux parties du levier en alignement l'une avec l'autre.

Selon une autre caractéristique de la platine de frein à main objet de l'invention, les moyens de verrouillage sont agencés de manière à assurer un verrouillage définitif des deux parties du levier en position de fonctionnement. Ces dernières ne risquent donc pas de revenir à une autre position en cours d'utilisation, ce qui pourrait gêner le fonctionnement et/ou être préjudiciable à la sécurité.

Selon un mode de réalisation préféré, les moyens de verrouillage comprennent au moins:
- un premier logement sur l'une desdites deux parties;
- un deuxième logement sur l'autre desdites deux parties, ces deux logements étant alignés de manière à n'en former qu'un seul lorsque les deux parties du levier sont en position de fonctionnement;
- un verrou, mobile dans le logement ainsi créé, et ayant une longueur supérieure à celle du deuxième logement; et
- des moyens, montés dans le premier logement, pour pousser le verrou dans le deuxième logement lorsque ces deux logements sont alignés.

Avantageusement, la platine objet de l'invention comporte en outre des moyens de maintien du verrou dans le premier logement lorsque les deux logements ne sont pas alignés. Ces moyens de maintien peuvent comporter une rampe, fixée sur celle des deux parties qui porte le deuxième logement, et sur laquelle vient buter le verrou.

Pour limiter le mouvement relatif des deux parties du levier, afin que le verrou reste en contact avec la rampe et ne sorte pas du premier logement avant que le levier ne soit en position de fonctionnement, la rampe peut être munie, à l'une de ses extrémités, d'une butée apte à arrêter le verrou.

Selon une autre caractéristique de la platine de frein à main objet de l'invention, celle-ci comporte des moyens de maintien des deux parties du levier en position de montage. Si, par exemple, les deux parties du levier sont montées pivotantes l'une par rapport à l'autre au moyen d'un axe, celui-ci peut être monté avec un serrage suffisant pour empêcher toute rotation relative non voulue desdites deux parties, contituant ainsi lesdits moyens de maintien. On évite donc qu'en cours de montage, les deux parties du levier ne se mettent accidentellement dans une position empêchant le passage à travers le trou prévu dans le plancher du véhicule.

Dans la plupart des cas, le levier comporte un cliquet apte à coopérer avec un secteur denté fixé sur ledit support afin de verrouiller le levier en position de serrage du frein. Dans ce cas, afin d'assurer un bon positionnement du levier en position de fonctionnement, on peut prévoir que le cliquet soit porté par l'une des deux parties du levier, l'agencement étant tel que le cliquet ne contacte la première dent du secteur denté que lorsque les deux parties du levier sont en position de fonctionnement.

L'invention apparaîtra mieux à la lecture de la description qui va suivre, donnée à titre d'exemple non limitatif, en référence aux dessins annexés, dans lesquels:
- la Figure 1 est une vue schématique de profil d'une platine de frein à main selon l'invention en position de montage;
- la Figure 2 est une vue semblable à la figure 1, mais avec arrachement partiel, montrant la même platine en position de fonctionnement;
- la Figure 3 est une vue de dessus de la platine de la figure 1;
- la Figure 4 est une vue semblable à la figure 2, mais sans arrachement;
- la Figure 5 est une vue schématique en coupe suivant la ligne V-V de la figure 4; et
- la Figure 6 est une vue schématique en coupe suivant la ligne VI-VI de la figure 5.

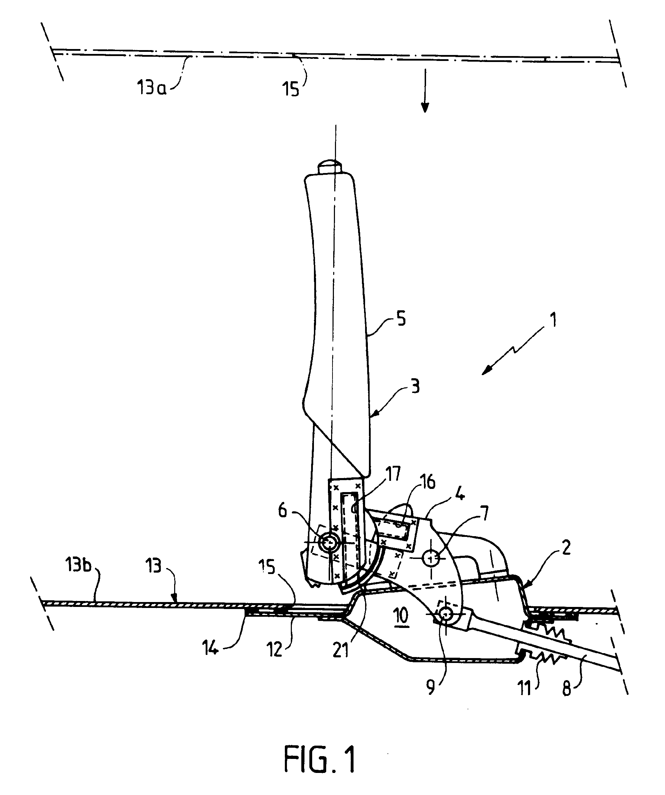

La figure 1 représente une platine de frein à main, portant la référence générale 1, qui se compose, de manière connue, d'un support 2 sur lequel est monté un levier 3. Selon l'invention, celui-ci se compose de deux parties, à savoir une première partie 4 et une deuxième partie 5 montées pivotantes l'une par rapport à l'autre grâce à un axe 6 sensiblement perpendiculaire au plan de la figure. La partie 4 est montée pivotante sur le support 2 grâce à un axe 7 également disposé sensiblement perpendiculairement au plan de la figure. Comme on le verra plus loin, lorsque les deux parties 4 et 5 du levier sont alignées et verrouillées dans cette position (position de fonctionnement), l'ensemble du levier 3 pivote par rapport au support 2 autour de l'axe 7.

A la partie inférieure de la partie 4 est accrochée une extrémité d'une tige rigide 8, les deux pièces étant liées l'une à l'autre de manière pivotante grâce à un axe 9. A l'autre extrémité (non représentée) de la tige 8 sont fixés les câbles actionnant le frein proprement dit.

L'axe 9 ainsi que les parties voisines de la tige 8 et de la partie 4 du levier se trouvent dans une partie du support 2 qui constitue un logement 10. Un soufflet 11, monté entre la tige 8 et le logement 10, assure l'étanchéité à ce niveau.

On voit encore sur la figure 1 que le support 2 présente à sa périphérie une bride 12 permettant de le fixer au plancher 13 du véhicule avec interposition d'un joint d'étanchéité 14. Cette fixation peut se faire par tout moyen, mais de préférence par vissage (afin de faciliter un éventuel démontage ultérieur). Pour cela, les vis (non représentées) peuvent être préalablement fixées au plancher 13, les écrous étant mis en place depuis l'extérieur de la caisse une fois la platine 1 amenée à sa position définitive. Cette opération peut être effectuée de manière automatique à l'aide d'une visseuse, d'un robot ou de tout appareil équivalent.

La platine 1 étant mise en place depuis l'extérieur de la caisse du véhicule, un trou 15 est prévu dans le plancher 13. En général, lors de cette phase du montage, le plancher est en position horizontale et la mise en place de la platine se fait par un mouvement relatif entre elle-même et le plancher, ce mouvement étant un mouvement de translation suivant une direction verticale.

Pendant cette mise en place, la partie 5 du levier doit se trouver dans la position illustrée à la figure 1 : c'est la position de montage dans laquelle la partie 5 est pratiquement verticale. De préférence, la platine se présente déjà dans cette position dans son emballage afin de faciliter le montage. Au départ, le plancher 13 se trouve, par rapport à la platine 1, dans la position 13a représentée schématiquement en traits mixtes. Suivant les cas, on descend la caisse sur l'ensemble mécanique du véhicule, la platine étant déjà montée sur cet ensemble, ou, la caisse étant fixe, on amène la platine sur cette dernière par un mouvement de bas en haut.

En général, on prépare en dehors de la chaîne de montage l'ensemble constitué par la platine 1, la tige 8 et éventuellement les câbles de frein. Ceci facilite d'une part certains réglages préalables et d'autre part le montage final en automatique car il est préférable de manipuler des sous-ensembles complets.

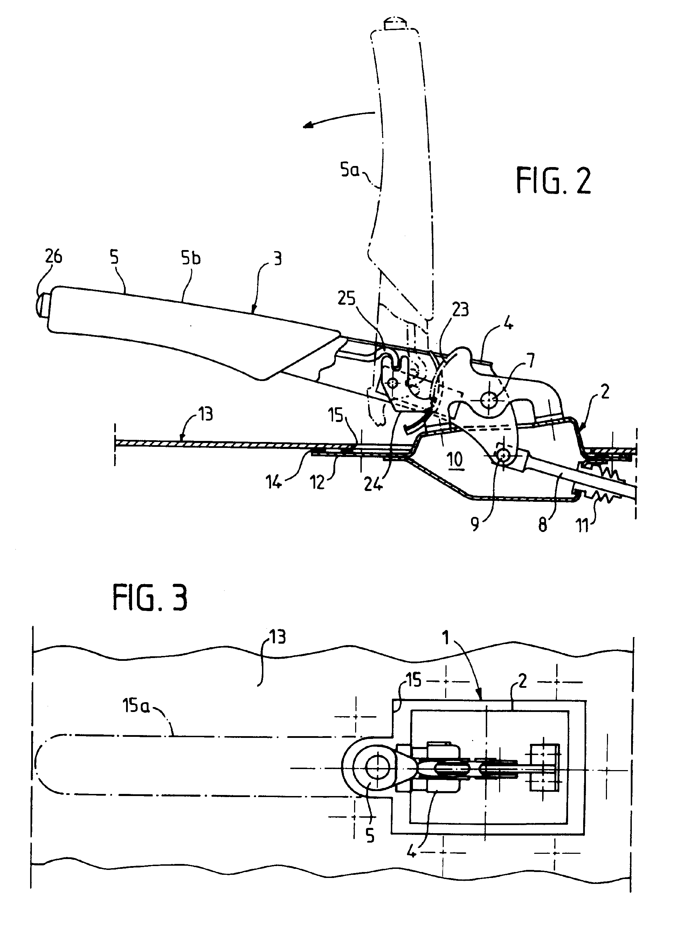

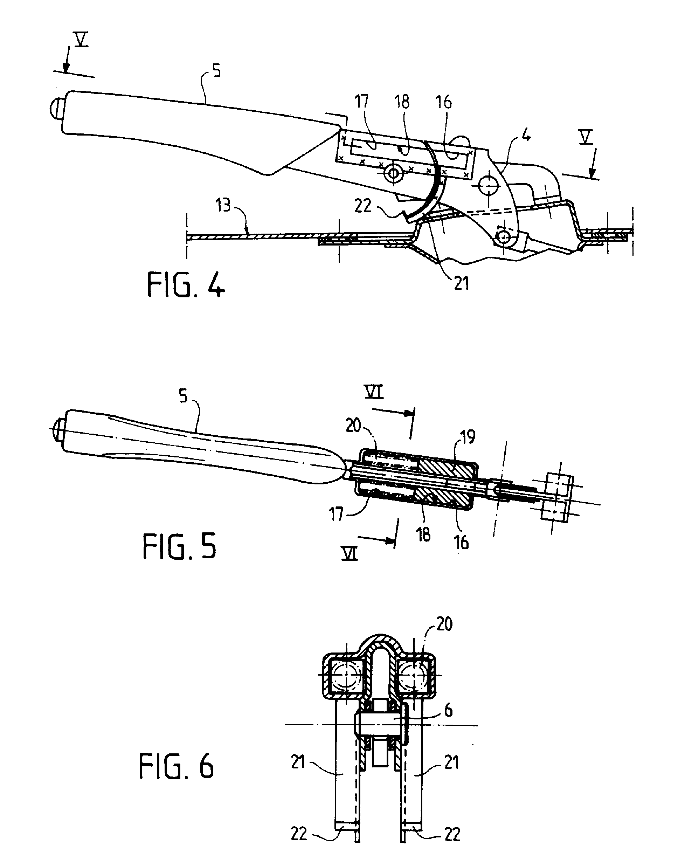

Le levier 3 et la partie supérieure du support 2 passent à travers le trou 15 du plancher 13, le mouvement s'arrêtant lorsque la bride 12 arrive au contact de la face inférieure (ou externe) du plancher 13. On procède alors à la fixation du support 2 sur le plancher et on met le levier 3 en position de fonctionnement. Pour cela, il suffit d'imprimer à la partie 5 du levier un mouvement de rotation autour de l'axe 6, dans le sens contraire des aiguilles d'une montre vu sur les figures 1 et 2. On passe ainsi de la position 5a, représentée en traits mixtes sur la figure 2, à la position 5b, représentée en traits pleins, dans laquelle les deux parties 4 et 5 du levier sont alignées et verrouillées par des moyens qui seront décrits ci-dessous en référence aux figures 4 à 6. Une fois verrouillé en position de fonctionnement, le levier 3 fonctionne exactement comme un levier classique.

La vue de dessus de la figure 3 montre la forme du trou 15 ménagé dans le plancher 13 du véhicule, la platine 1 du frein à main étant dans la même position qu'à la figure 1. On voit que les dimensions de ce trou sont faibles, par rapport à celles du levier 3 notamment. Le trou 15 est de forme rectangulaire avec, à gauche en regardant la figure 3, une partie semi-circulaire dans laquelle passe la partie 5 du levier 3, le diamètre de cette partie semi-circulaire étant inférieur à la largeur du rectangle. A titre de comparaison, on a représenté en traits mixtes en 15a le contour qu'il aurait fallu donner au trou 15 si le levier 3 avait été constitué comme les leviers de l'art antérieur, c'est-à-dire en une seule pièce. Le trou aurait été nettement plus grand puisqu'au cours du montage, le levier aurait été constamment dans la position illustrée à la figure 2, entraînant une diminution de la rigidité du plancher et rendant l'étanchéité plus difficile à réaliser. De plus, le nombre de points de fixation du support 2 sur le plancher 3 aurait été nettement plus élevé.

On va décrire maintenant les moyens de verrouillage des parties 4 et 5 du levier en position de fonctionnement, en référence aux figures 4 à 6.

Les parties 4 et 5 du levier présentent chacune sur le côté un logement 16 et 17 respectivement (figures 1 et 4). Dans l'exemple décrit ici, le levier est symétrique par rapport à un plan et il y a deux logements 16 sur la partie 4 et deux logements 17 sur la partie 5, les deux logements d'une même partie étant symétriques par rapport à ce plan (figure 5). Cependant, on ne sortirait pas du cadre de l'invention en utilisant une configuration différente.

Chaque logement 16, 17 a une forme sensiblement rectiligne et leur forme est telle que, lorsque les deux parties du levier sont en position de fonctionnement, ils n'en forment plus qu'un, portant la référence 18. Un verrou 19, de forme allongée et dont la section correspond à celle du logement 18, peut coulisser dans ce dernier sous l'action d'un ressort 20. Dans le cas particulier décrit ici, les ressorts 20 sont dans les logements 17 et poussent les verrous en direction des logements 16. Chaque verrou 19 a une longueur supérieure à celle des logements 16 et a donc, en position de fonctionnement, une partie dans le logement 16 et une autre dans le logement 17: on obtient ainsi un bon alignement et une solidarisation définitive des parties 4 et 5 du levier 3. De préférence, les verrous 19 sont ajustés sans jeu dans les logements 18 pour supprimer tout débattement entre les deux parties du levier en cours d'utilisation.

Etant donné que les ressorts 20 poussent constamment les verrous 19 vers l'extérieur des logements 17, il a fallu prévoir des moyens pour maintenir les verrous en place lorsque le levier 3 est en position de montage. Pour cela, on a prévu deux rampes 21 sur la partie 4 du levier (figures 1, 4 et 6). Ces rampes sont en forme d'arcs de cercle centrés sur l'axe de pivotement relatif des deux parties du levier. Pour limiter le mouvement de la partie 5 du levier, chaque rampe 21 comporte à l'une de ses extrémités une butée 22 qui peut être réalisée à partir d'un bord plié de la rampe. Les rampes 21 jouent donc un triple rôle puisqu'elles maintiennent les verrous 19 lorsque le levier n'est pas encore en position de fonctionnement, limitent le mouvement de la partie 5 du levier et servent de guide aux verrous 19 lorsqu'on fait passer la partie 5 de la position de montage à la position de fonctionnement.

Lorsqu'on amène la platine 1 en position sur le plancher du véhicule, il faut que la partie 5 du levier 3 reste dans la position illustrée à la figure 1. On peut par exemple monter l'axe 6 avec un serrage suffisant pour éviter que la partie 5 ne retombe naturellement à une autre position.

Si l'on se reporte à nouveau à la figure 2, on voit que la platine de frein à main objet de l'invention comporte, de manière connue, un secteur denté 23, fixe par rapport au support 2, sur lequel vient se bloquer un cliquet 24 porté par le levier 3 lorsque ce dernier est en position de serrage du frein. Un crochet 25, manoeuvré par un bouton-poussoir 26, coopère avec le cliquet 23 lorsqu'on desserre le frein. Dans l'exemple décrit ici, le cliquet 24, le crochet 25 et le bouton-poussoir 26 sont montés sur la partie 5 du levier.

Afin d'assurer un bon positionnement du levier en position de fonctionnement, on peut déterminer la forme et l'agencement de ces différentes pièces pour que le cliquet 24 contacte la première dent du secteur 23 à l'instant où la position de fonctionnement est atteinte. Ceci est particulièrement interessant dans le cas où le cliquet 24 comporte plusieurs dents, deux par exemple, afin d'assurer un engrènement correct de ces deux pièces l'une sur l'autre.

La platine de frein à main objet de l'invention présente des avantages particulièrement interessants puisqu'elle peut être montée de manière automatique sur le véhicule sans modification des appareils existants et en ne nécessitant qu'un trou de dimensions réduites. Ceci améliore la rigidité du plancher et rend plus facile la réalisation de l'étanchéité lors de la fixation du support sur le plancher. La durée des opérations de montage n'est pas sensiblement affectée puisque le levier est mis en position de fonctionnement par un simple mouvement de rotation et, en outre, le nombre de vis nécessaire à la fixation du support sur le plancher est réduit grâce aux faibles dimensions du trou.

De plus, des sécurités sont prévues, notamment le verrouillage définitif des deux parties du levier en position de fonctionnement pour que celui-ci se comporte en utilisation comme un levier classique. Des moyens sont également prévus pour que le levier reste en position de montage pendant toute la durée de la mise en place de la platine.

Enfin, il est bien entendu que l'invention ne se limite pas au seul mode de réalisation qui vient d'être décrit, mais qu'on peut imaginer de nombreuses variantes sans sortir pour autant du cadre de l'invention selon les revendications qui suivent. C'est ainsi que l'homme du métier pourra faire varier, en fonction de chaque cas particulier, le montage relatif des deux parties du levier ou les moyens de verrouillage.

Quant aux applications, elles ne se limitent pas aux platines de frein à main pour véhicules automobiles. En effet, l'invention peut s'appliquer à tous les cas où un objet ou un appareil quelconque est mis en place par passage à travers un trou prévu dans un plancher ou élément analogue, s'il est souhaitable que ce trou soit de dimensions réduites.

## Revendications

1. Platine de frein à main, notamment pour véhicule automobile, comprenant un levier (3) monté sur un support (2),
caractérisée en ce que le levier (3) est réalisé en deux parties (4,5) mobiles l'une par rapport à l'autre entre une position de montage et une position de fonctionnement et en ce qu'elle comporte des moyens de verrouillage desdites deux parties (4,5) en position de fonctionnement.

2. Platine selon la revendication 1, caractérisée en ce que, le levier (3) étant de forme allongée, lesdites deux parties (4,5) sont mobiles l'une par rapport à l'autre en rotation autour d'un axe sensiblement perpendiculaire à la direction générale du levier 3.

3. Platine selon l'une quelconque des revendications 1 et 2, caractérisée en ce que les moyens de verrouillage sont agencés de manière à assurer un verrouillage définitif desdites deux parties (4,5) en position de fonctionnement.

4. Platine selon la revendication 3, caractérisée en ce que lesdits moyens de verrouillage comprennent au moins:
- un premier logement (17) sur l'une (5) desdites deux parties;
- un deuxième logement (16) sur l'autre (4) desdites deux parties, ces deux logements (16,17) étant alignés de manière à n'en former qu'un seul (18) lorsque les deux parties (4,5) du levier (3) sont en position de fonctionnement;
- un verrou (19), mobile dans le logement (18) ainsi créé et ayant une longueur supérieure à celle du deuxième logement (16); et
- des moyens (20), montés dans le premier logement (17), pour pousser le verrou (19) dans le deuxième logement (16) lorsque ces deux logements (16,17) sont alignés.

5. Platine selon la revendication 4, caractérisée en ce qu'elle comporte en outre des moyens de maintien du verrou (19) dans le premier logement (17) lorsque les deux logements (16,17) ne sont pas alignés.

6. Platine selon la revendication 5, caractérisée en ce que lesdits moyens de maintien du verrou (19) comprennent une rampe (21), fixée sur celle (4) desdites deux parties qui porte le deuxième logement (16), et sur laquelle vient buter le verrou (19).

7. Platine selon la revendication 6, caractérisée en ce que ladite rampe (21) est munie, à l'une de ses extrémités, d'une butée (22) apte à arrêter le verrou (19) afin de limiter le mouvement relatif des deux parties (4,5) du levier (3).

8. Platine selon l'une quelconque des revendications 1 à 7, caractérisée en ce qu'elle comporte en outre des moyens de maintien des deux parties (4,5) du levier (3) en position de montage.

9. Platine selon la revendication 8, caractérisée en ce que, lesdites deux parties (4,5) du levier (3) étant montées pivotantes l'une par rapport à l'autre au moyen d'un axe (6), celui-ci est monté avec un serrage suffisant pour empêcher toute rotation relative non voulue desdites deux parties (4, 5), constituant ainsi lesdits moyens de maintien des deux parties (4,5) du levier (3).

10. Platine selon l'une quelconque des revendications 1 à 9, caractérisée en ce que, le levier (3) comportant un cliquet (24) apte à coopérer avec un secteur denté (23) fixé sur ledit support (2), le cliquet (24) est porté par l'une (5) desdites deux parties du levier (3) et l'agencement est tel que le cliquet (24) ne contacte la première dent du secteur denté (23) que lorsque les deux parties (4,5) du levier sont en position de fonctionnement.

## Patentansprüche

1. Handbremsenhalterung, insbesondere für Kraftfahrzeuge, umfassend einen auf eine Stütze (2) montierten Hebel (3), dadurch gekennzeichnet, daß der Hebel (3) aus zwei zueinander beweglichen Teilen (4,5) besteht, und zwar beweglich zwischen einer Montage- und einer Funktionsstellung, sowie dadurch, daß sie Verriegelungsvorrichtungen für die genannten beiden Teile (4,5) in Funktionsstellung aufweist.

2. Halterung gemäß Anspruch 1, dadurch gekennzeichnet, daß der Hebel (3) länglich ist und die besagten beiden Teile (4,5) zueinander um einen zur allgemeinen Richtung des Hebels (3) deutlich quer verlaufenden Bolzen herum beweglich sind.

3. Halterung gemäß einem der Ansprüche 1 und 2, dadurch gekennzeichnet, daß die Verriegelungsvorrichtungen so angeordnet sind, daß sie eine endgültige Verriegelung der besagten beiden Teile (4,5) in Funktionsstellung gewährleisten.

4. Halterung gemäß Anspruch 3, dadurch gekennzeichnet, daß die besagten Verriegelungsvorrichtungen mindestens umfassen:
- ein erstes Lager (17) an einem (5) der beiden besagten Teile;
- ein zweites Lager (16) am anderen (4) der beiden besagten Teile, wobei diese beiden Lager (16,17) so ausgerichtet sind, daß sie nur ein einziges (18) bilden, wenn sich die beiden Teile (4,5) des Hebels in Funktionsstellung befinden;
- einen Riegel (19), der in dem so geschaffenen Lager (18) beweglich und länger als das zweite Lager (16) ist; und
- im ersten Lager (17) montierte Vorrichtungen (20), mit denen der Riegel (19) in das zweite Lager (16) gedrückt wird, wenn diese beiden Lager (16,17) aufeinander ausgerichtet sind.

5. Halterung gemäß Anspruch 4, dadurch gekennzeichnet, daß sie außerdem Vorrichtungen zum Zurückhalten des Riegels (19) im ersten Lager (17) umfaßt, wenn die beiden Lager (16,17) nicht aufeinander ausgerichtet sind.

6. Halterung gemäß Anspruch 5, dadurch gekennzeichnet, daß die besagten Vorrichtungen zum Zurückhalten des Riegels (19) aus einer Rampe (21) bestehen, die an der Rampe (4) der besagten beiden Teile sitzt, die das zweite Lager (16) beherbergt, und an die der Riegel (19) anschlägt.

7. Halterung gemäß Anspruch 6, dadurch gekennzeichnet, daß die genannte Rampe (21) an einem ihrer Enden einen Anschlag (22) aufweist, der den Riegel (19) blockiert, um die Bewegung der beiden Teile (4,5) des Hebels (3) zueinander zu begrenzen.

8. Halterung gemäß einem der Ansprüche 1 bis 7, dadurch gekennzeichnet, daß sie außerdem Vorrichtungen aufweist, die die beiden Teile (4,5) des Hebels (3) in Montageposition halten.

9. Halterung gemäß Anspruch 8, dadurch gekennzeichnet, daß, nachdem die beiden Teile (4,5) des Hebels (3) schwenkbar zueinander mit Hilfe eines Bolzens (6) montiert sind, dieser mit genügend Spanndruck montiert wird, um jegliche ungewollte Drehung der beiden Teile (4,5) zueinander zu verhindern, und somit die genannten Haltevorrichtungen für die beiden Teile (4,5) des Hebels (3) bildet.

10. Halterung gemäß einem der Ansprüche 1 bis 9, dadurch gekennzeichnet, daß, nachdem der Hebel (3) eine Sperraste (24) aufweist, die in einen gezahnten Bereich (23) an der besagten Stütze (2) greift, die Sperraste (24) an einem (5) der beiden Teile des Hebels (3) sitzt und die Anordnung dergestalt ist, daß die Sperraste (24) den ersten Zahn des gezahnten Bereichs (23) erst berührt, wenn die beiden Teile (4,5) des Hebels in Funktionsstellung sind.

## Claims

1. A hand brake mounting plate, particularly for a motor vehicle, comprising a lever (3) mounted on a support (2), characterised in that the lever (3) is produced in two parts (4, 5) movable in relation to one another between a mounting position and an operating position and in that it comprises means for locking said two parts (4, 5) in the operating position.

2. A mounting plate according to Claim 1, characterised in that, the lever (3) being elongated in form, said two parts (4, 5) are movable in relation to one another in rotation around an axis substantially perpendicular to the general direction of the lever 3.

3. A mounting plate according to any one of Claims 1 and 2, characterised in that the locking means are arranged so as to ensure definitive locking of said two parts (4, 5) in the operating position.

4. A mounting plate according to Claim 3, characterised in that said locking means comprise at least:
- a first housing (17) on one (5) of said two parts;
- a second housing (16) on the other (4) of said two parts, these two housings (16, 17) being aligned so as to form just one (18) when the two parts (4, 5) of the lever (3) are in the operating position;
- a locking device (19), movable in the housing (18) thus created and having a length greater than that of the second housing (16); and
- means (20), mounted in the first housing (17), for pushing the locking device (19) into the second housing (16) when these two housings (16, 17) are aligned.

5. A mounting plate according to Claim 4, characterised in that it further comprises means for holding the locking device (19) in the first housing (17) when the two housings (16, 17) are not aligned.

6. A mounting plate according to Claim 5, characterised in that said means for holding the locking device(19) comprise a ramp (21), fixed to that one (4) of the two parts which carries the second housing (16), and against which the locking device (19) abuts.

7. A mounting plate according to Claim 6, characterised in that said ramp (21) is provided, at one of its extremities, with a limit stop (22) suitable for stopping the locking device (19) in order to limit the relative movement of the two parts (4, 5) of the lever (3).

8. A mounting plate according to any one of Claims 1 to 7, characterised in that it further comprises means for holding the two parts (4, 5) of the lever (3) in the mounting position.

9. A mounting plate according to Claim 8, characterised in that, said two parts (4, 5) of the lever (3) being mounted so as to pivot relative to one another by means of an axis (6), the latter is mounted with sufficient clamping to prevent any undesired relative rotation of said two parts (4, 5), thus constituting said means for holding the two parts (4, 5) of the lever (3).

10. A mounting plate according to any one of Claims 1 to 9, characterised in that, the lever (3) comprising a ratchet (24) suitable for cooperating with a toothed sector (23) fixed to said support (2), the ratchet (24) is carried by one (5) of said two parts of the lever (3) and the arrangement is such that the ratchet (24) only comes into contact with the first tooth of the toothed sector (23) when the two parts (4, 5) of the lever are in the operating position.
